# FASCICULE DE BREVET EUROPEEN

(11) **EP 3 004 700 B1**
(45) Date de publication et mention de la délivrance du brevet: **15.03.2017**
(21) Numéro de dépôt: 14726602.7
(22) Date de dépôt: 27.05.2014
(51) Int. Cl.: F16K 5/04, F16K 5/06, G21C 1/09

(54) **SYSTÈME DE RÉGULATION D'UN LIQUIDE DANS UN CIRCUIT**
SYSTEM ZUR STEUERUNG EINER FLÜSSIGKEIT IN EINEM KREISLAUF
SYSTEM FOR REGULATING A LIQUID IN A CIRCUIT

(30) Priorité: 31.05.2013 FR 1355026
(43) Date de publication de la demande: 13.04.2016
(73) Titulaire: Commissariat à l'Énergie Atomique et aux Énergies Alternatives, 75015 Paris (FR)
(72) Inventeur: REY, Frédéric, F-04860 Pierrevert (FR)
(74) Mandataire: Hautier, Nicolas
(86) Numéro de dépôt international: PCT/EP2014/060909
(87) Numéro de publication internationale: WO 2014/191388

(56) Documents cités:
- WO-A1-2011/058249
- US-A- 5 722 458

## Description

### DOMAINE TECHNIQUE DE L'INVENTION

L'invention concerne de manière générale le domaine des équipements permettant la circulation d'un liquide dans un circuit. Plus précisément, l'invention concerne un système destiné à s'intégrer dans un circuit dont le sens de circulation peut être alterné.

Elle s'applique de manière particulièrement avantageuse aux circuits industriels dans lesquels il est souhaitable de faire varier la charge et le sens de circulation.

Une application concerne par exemple le nettoyage d'équipements du circuit, tels que des filtres, par inversion du sens de circulation.

Une autre application concerne les circuits d'essai qui permettent de tester ou caractériser des équipements tels que des pompes. Un domaine d'application privilégié est l'industrie nucléaire avec la caractérisation des équipements intégrés dans les réacteurs dont le caloporteur est un métal liquide.

Ainsi, l'invention s'inscrit particulièrement bien dans le développement des réacteurs de 4^{ème} génération à caloporteur sodium tel que le réacteur ASTRID (Advanced Sodium Technological Reactor for Industrial Demonstration).

### ÉTAT DE LA TECHNIQUE

Dans certains types de circuit, il est nécessaire de pouvoir inverser le sens de circulation du liquide. Il existe pour cela des pompes capables de délivrer un débit réversible. C'est le cas des pompes électromagnétiques (PEM).

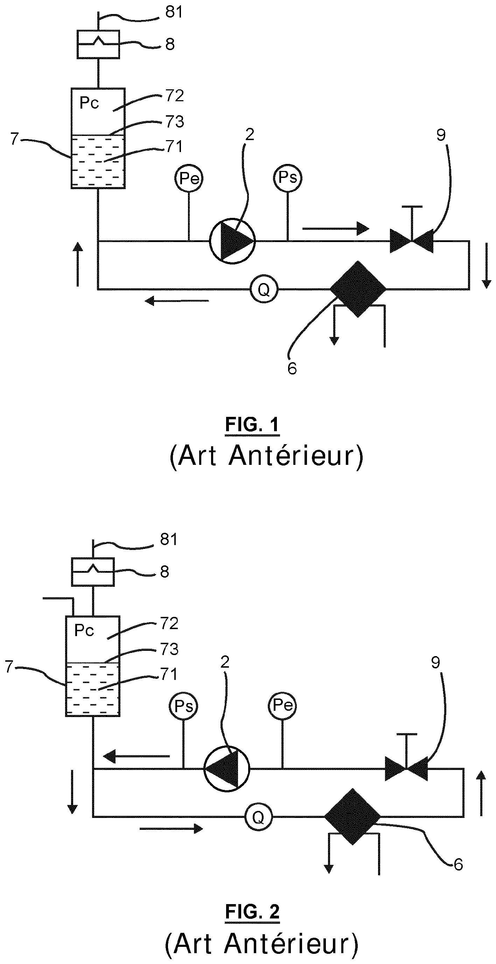

L'inversion du sens de circulation du fluide dans un circuit modifie inévitablement la répartition de pression le long de celui-ci. Ce changement de répartition de pression n'est pas compatible avec un circuit qui n'est pas prévu pour cela comme, cela va être expliqué plus en détail ci-dessous en référence à la figure 1 qui décrit un circuit conventionnel.

Le circuit illustré en figure 1 comprend une pompe 2 et une vanne de laminage 9, permettant par exemple d'interrompre la circulation ou encore de faire varier la perte de charge comme cela est le cas dans les circuits de tests et de caractérisation des pompes. Dans l'exemple illustré en figure 1, le circuit présente en outre un échangeur 6, par exemple pour évacuer la chaleur que la pompe apporte au circuit. Pompe 2, vanne de laminage 9 et échangeur 6 sont placés en série.

Le circuit comprend également un réservoir d'expansion 7, également désigné réservoir de pressurisation, placé en amont de la pompe 2 et en dérivation par rapport au circuit en étant connecté à une canalisation. De manière connue, et comme illustré en figure 1, un réservoir d'expansion 7 comprend une chambre d'expansion en communication libre et permanente avec le liquide du circuit et comprend un gaz 72 appliquant une pression sur la surface libre 73 du liquide 71 du réservoir d'expansion 7. Il ne circule pas de débit dans le réservoir d'expansion 7. Il y existe seulement un déplacement du liquide 71 du réservoir d'expansion 7 permettant de compenser les variations de volume du liquide présent dans le circuit. Cette variation de volume est due aux variations de température du liquide. Dans le cadre de circuit caloporteur, ces variations de volume peuvent être significatives. Ainsi, le réservoir d'expansion 7 permet de limiter les variations de pression en amont d'une pompe 2.

Le réservoir d'expansion 7 est associé à un dispositif de contrôle de la pression du gaz de pressurisation Pc, qui par injection ou retrait de gaz permet de faire varier la pression du gaz 72 et donc la pression. Il est également doté d'un dispositif de protection 8 limitant la pression dans le circuit pour en éviter la destruction et les conséquences associées. En cas de surpression dans le circuit, le dispositif de protection 8 s'active et la surpression (de gaz et/ou de liquide) est dirigée vers un exutoire 81. Il y a alors ouverture du circuit.

Dans les circuits de tests, en mesurant la pression Pc du réservoir d'expansion 7, et les pressions en amont Pe et en aval Ps de la pompe 2 ainsi qu'en faisant varier des paramètres tel que le sens de circulation du liquide et la perte de charge par actionnement de la vanne de laminage 9, on peut caractériser le comportement de la pompe 2.

Sur la figure 1, le sens de circulation est représenté par les flèches. La répartition de pression est alors telle que : Ps > Pe. Par simplification, on considère ici que Pc ≈ Pe. En effet Pc est fixée par la valeur de la pression Pe et la différence entre ces deux pressions est égale à la pression exercée par la hauteur de liquide comprise entre l'altitude de la surface libre 73 dans le réservoir d'expansion 7 et l'altitude de l'entrée de la pompe 2. Cette pression altimétrique est le plus souvent négligeable. La pression Pc est généralement fixée à une valeur proche de la pression atmosphérique (de 1 à 2 bar absolus), donc nettement inférieure aux valeurs que peut prendre Ps (de quelques bars à plusieurs dizaines de bars voire plus). Le dispositif de protection 8 est prévu pour s'enclencher si la pression Pc atteint une valeur limite au-delà de laquelle l'installation n'est plus en sécurité. Dans le cas du schéma précédent, ce dispositif pourrait être taré à une pression à peine supérieure à Pc, soit 2,5 bars par exemple. Si le sens de circulation est celui de la Figure 1, i.e. de la pompe 2 vers la vanne de laminage 9, l'ensemble fonctionne correctement.

La figure 2 illustre le circuit de la figure 1 dans lequel le sens de circulation est inversé.

Cette inversion de sens de circulation, même volontaire, fait que la pompe 2 débite à la pression Ps dans la portion du circuit qui est reliée au réservoir d'expansion 7. Cela risque donc de déclencher le dispositif de protection 8 et d'ouvrir le circuit alors qu'il n'y a pas défaillance du circuit.

Par ailleurs, la pression Pe en entrée de pompe 2 peut potentiellement descendre sous la pression de vapeur saturante du fluide contenu dans le circuit et entraîner sa vaporisation dans la portion de circuit comprise entre la vanne de laminage 9 et la pompe 2. La pompe 2 peut alors être endommagée et des turbulences importantes peuvent être générées.

Ainsi, la position relative de la pompe 2 et du réservoir d'expansion 7 dépend du sens de circulation du liquide dans le circuit. Cela pose donc problème dans les circuits à sens de circulation réversible.

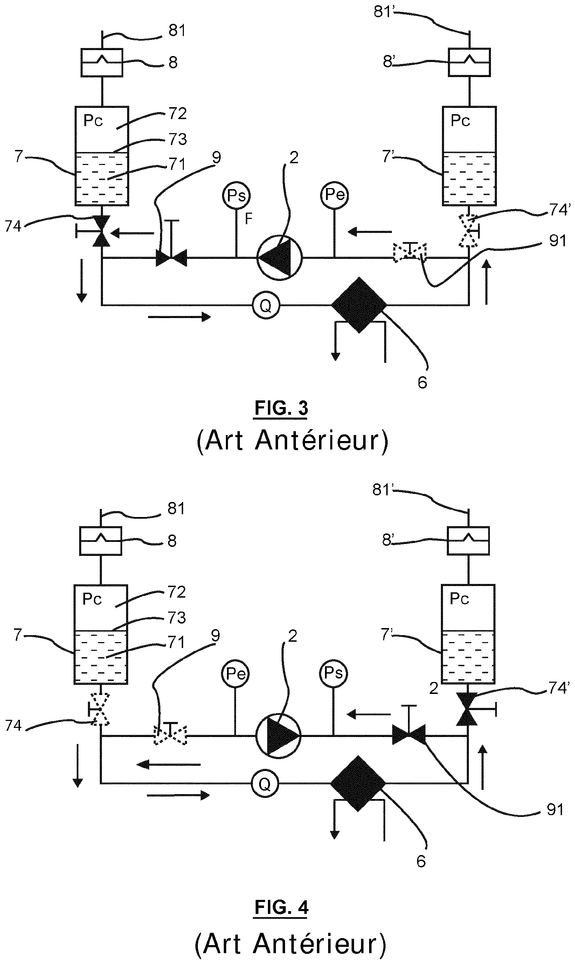

Pour permettre la réversibilité du sens de circulation, une solution consiste à équiper le circuit de deux vannes de laminage 9, 91 et de deux réservoirs d'expansion 7, 7', chacun doté d'un dispositif de sécurité 8, 8' et d'un dispositif de contrôle de la pression. Un tel système est illustré en figure 3 et 4. En outre, il est nécessaire de prévoir une vanne d'isolement 74, 74' entre chaque réservoir d'expansion et le circuit. En fonction du sens de circulation, un réservoir d'expansion 7, 7' est déconnecté du circuit en fermant la vanne d'isolement 74, 74' qui le relie au circuit. Sur ces figures les vannes en pointillés sont pleinement ouvertes et les vannes en traits pleins sont pleinement fermées.

Cette solution présente pour inconvénient de nécessiter de nombreux équipements et une complexité accrue ce qui tend à réduire la fiabilité de l'ensemble et à augmenter le coût de fabrication et de maintenance. De plus, cela nécessite soit des interventions humaines fréquentes pour les ouvertures et les fermetures de vannes, soit la mise en place d'un système de pilotage automatique, avec les risques de défaillances.

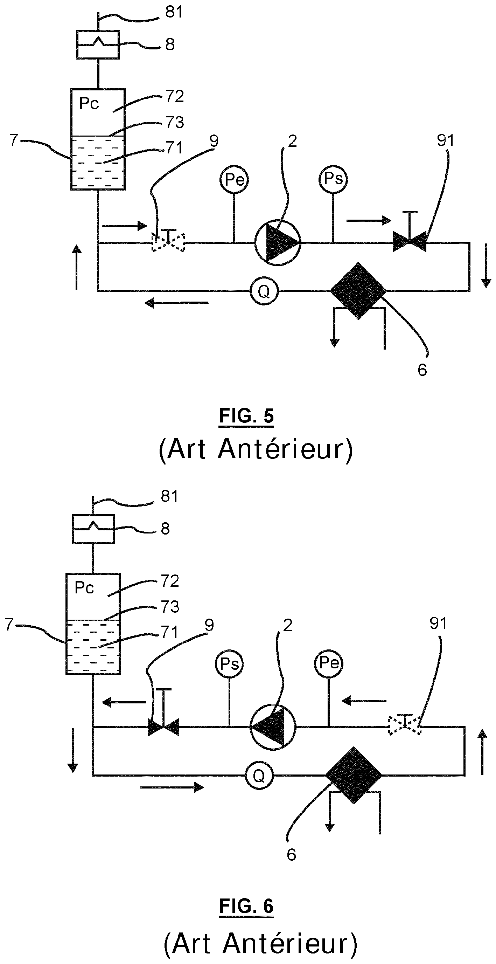

Une autre solution illustrée aux figures 5 et 6, consiste à prévoir un circuit équipé de deux vannes de laminage 9, 91 et d'un seul réservoir d'expansion 7 doté d'un dispositif de protection 8 et d'un dispositif de contrôle de la pression. La vanne de laminage 9 disposée en entrée de pompe 2 est toujours pleinement ouverte. Cette vanne est représentée en pointillés dans le deux sens de circulation. Lorsque le réservoir d'expansion est disposé en entrée de pompe (figure 5), le circuit fonctionne normalement, puisque la pression en sortie de pompe n'est pas directement transférée au réservoir d'expansion 7.

Lorsque le réservoir d'expansion 7 est disposé en sortie de pompe (figure 6), la perte de charge provoquée par l'échangeur risque d'abaisser trop fortement la pression en entrée de pompe et de l'amener sous un seuil de cavitation.

Cette solution est donc limitée à des applications dans lesquelles la pression est suffisamment élevée pour éviter la cavitation. La plage de débit utile est par conséquent nécessairement réduite.

Le document US 5,722,458 divulgue un système de régulation
comprenant les caractéristiques du préambule de la revendication 1.

Il existe donc un besoin consistant à offrir une solution permettant une circulation de liquide qui soit réversible et qui ne présente pas certains au moins des inconvénients mentionnés ci-dessus des solutions existantes.

La présente invention vise à atteindre cet objectif pour des circuits dans lesquels la vanne est une vanne à boisseau.

Plus précisément, elle a pour objectif de proposer un circuit intégrant une vanne à boisseau et permettant d'alterner le sens de circulation tout en limitant la complexité du circuit et en permettant une plage de fonctionnement non restreinte, et ceci de préférence pour plusieurs type de vannes à boisseau.

### RÉSUMÉ DE L'INVENTION

Pour atteindre cet objectif, un mode de réalisation de la présente invention concerne un système de régulation d'un liquide circulant dans un circuit de préférence apte à inverser le sens de circulation, le système comprenant :
- une vanne à boisseau comprenant au moins une entrée et une sortie, le boisseau comprenant un passage interne à travers lequel est destiné à passer le liquide s'écoulant depuis l'entrée vers la sortie de la vanne lorsque la vanne est ouverte au moins partiellement, la position du boisseau par rapport à un corps de la vanne permettant de réguler le débit de l'écoulement du liquide à travers la vanne,
- un réservoir d'expansion en communication avec le liquide s'écoulant dans le circuit et destiné à contenir du liquide et un gaz de compensation.
Le boisseau comprend au moins en partie un canal d'expansion qui présente au moins une ouverture latérale située sur une face latérale du boisseau et qui est conformé pour assurer une communication entre ladite ouverture latérale et le réservoir d'expansion, la vanne étant conformée de manière à ce que :
- au moins lorsque la vanne est fermée : l'ouverture latérale est en communication directe avec le liquide provenant de l'entrée ou de la sortie de la vanne, c'est-à-dire lorsque le passage interne ne communique pas directement avec l'entrée ou la sortie de la vanne ; le liquide présent dans l'entrée ou la sortie de la vanne peut donc communiquer avec le réservoir d'expansion en entrant dans le canal d'expansion par l'ouverture latérale,
- lorsque la vanne est ouverte au moins partiellement, c'est-à-dire lorsque le passage interne communique directement avec l'entrée et/ou la sortie de la vanne, l'ouverture latérale coopère avec une paroi interne d'un corps de la vanne de manière à former un conduit en communication d'une part avec le réservoir d'expansion et d'autre part avec le passage interne.

Ainsi, le réservoir d'expansion est raccordé au circuit par l'intermédiaire de la vanne, de préférence entre l'entrée et la sortie de la vanne, et de manière à ce que le réservoir d'expansion communique avec au moins l'une parmi l'entrée et la sortie de la vanne quelle que soit la position du boisseau.

La position du boisseau est également indépendante de la pression du liquide dans le circuit et dans le réservoir d'expansion. Le canal du boisseau permet une communication permanente entre le réservoir d'expansion et au moins l'une des branches du circuit.

Ainsi, l'invention permet de concevoir un circuit réversible dans lequel le réservoir d'expansion est en permanence en communication avec le liquide du circuit.

En outre, l'invention permet d'améliorer considérablement la fiabilité du système puisqu'elle ne nécessite pas de piloter avec précision des vannes d'isolement d'un ou plusieurs réservoirs comme dans une solution de l'art antérieur. Avec la solution illustrée en figure 3 et 4, un pilotage incorrect des vannes d'isolement peut en effet entrainer une désactivation simultanée des deux réservoirs d'expansion ce qui peut provoquer de graves conséquences.

Par ailleurs, il est possible de n'avoir qu'une seule vanne de laminage formée par la vanne. Cela permet de réduire la perte de charge inévitablement induite par la présence de vannes additionnelles comme cela est le cas dans d'autres solutions de l'art antérieur. L'invention permet ainsi d'élargir la plage des débits admissibles.

En plus de simplifier le pilotage du réservoir d'expansion, l'invention permet de réduire significativement le nombre de composants nécessaires et notamment le nombre de composants de pilotage, ce qui permet d'améliorer la fiabilité du circuit et d'en diminuer le coût.

Par ailleurs, le système selon l'invention permet de contrôler de manière précise et fiable la pression la plus basse du circuit, évitant ainsi que la pression dans le circuit ne baisse en dessous d'une pression minimale souhaitée.

De manière particulièrement avantageuse, le système selon l'invention s'applique aussi bien aux vannes droites, également désignées vannes en ligne qu'aux vannes coudées. Il peut donc s'intégrer dans toutes les portions du circuit, dans les tronçons rectilignes comme dans les courbures ou les angles.

L'un des avantages de l'invention est également de réduire les risques d'apparition de jets de liquide à l'intérieur du réservoir d'expansion. Le niveau de la surface libre du liquide dans le réservoir d'expansion est donc stabilisé ce qui rend plus fiable le contrôle du niveau et de la pression de liquide dans le circuit.

De manière facultative, l'invention peut en outre présenter au moins l'une quelconque des caractéristiques suivantes qui peuvent être considérées séparément ou en combinaison :
- Avantageusement, le système est configuré de manière à ce que le réservoir d'expansion soit, en fonctionnement, en communication permanente avec le liquide s'écoulant dans le circuit
- De préférence, le conduit débouche d'une part dans le réservoir d'expansion et débouche d'autre part dans un espace formé par une face inférieure du boisseau et un fond du corps de la vanne, cet espace étant en communication avec le passage interne par un canal pratiqué dans le boisseau.
- De préférence, l'ouverture latérale est un évidement, la coopération de l'évidement et de la paroi interne solidaire du corps de la vanne formant le conduit lorsque la vanne est ouverte au moins partiellement.
- Le corps comprend un siège configuré pour recevoir un boisseau. La paroi interne solidaire du corps est une paroi du siège. Alternativement, le corps de vanne ne comprend pas de siège et la paroi solidaire du corps de vanne avec laquelle coopère le boisseau et une paroi interne opposée à une paroi externe du corps de vanne.
- De préférence, l'évidement s'étend depuis le réservoir d'expansion jusqu'à la face inférieure du boisseau. Plus précisément, l'évidement s'étend depuis une face supérieure du corps du boisseau jusqu'à la face inférieure du boisseau. De préférence, l'évidement forme une rainure.
- Selon un mode de réalisation avantageux, le boisseau est un boisseau sphérique. Ce type de boisseau présente pour avantage d'améliorer l'étanchéité. L'invention permet de s'appliquer de manière particulièrement simple à ce type de vanne. Alternativement, le boisseau est un boisseau cylindrique.
- Avantageusement, le système est conformé de manière à ce que lorsque la vanne est ouverte, le réservoir d'expansion communique avec le liquide traversant la vanne uniquement par l'intermédiaire de l'évidement, dudit espace et du canal inférieur.
- Avantageusement, la vanne est de type à « passage intégral ». Elle permet, lorsqu'elle est totalement ouverte de créer une perte de charge du même ordre que la portion d'une tuyauterie, d'un coude ou d'une section droite, de même longueur.
- De préférence, tout le liquide passant depuis le circuit au réservoir d'expansion passe par le ou les canaux d'expansion.

De préférence, le système est conformé de manière à ce que lorsque la vanne est ouverte, le réservoir d'expansion communique avec le liquide traversant la vanne uniquement par l'intermédiaire de l'évidement, dudit espace et du canal inférieur.
Ainsi, lorsque la vanne est ouverte et que la vitesse de circulation du liquide est importante, le liquide pénétrant dans le réservoir d'expansion ne passe pas directement depuis le passage interne au réservoir d'expansion, limitant de ce fait les jets dans ce dernier.
- Avantageusement, la vanne est une vanne droite. Plus généralement, l'entrée et la sortie de la vanne forment un angle compris entre 130° et 180°. Alternativement, la vanne est une vanne coudée, l'entrée et la sortie de la vanne formant un angle inférieur à 130°.
- Avantageusement, la vanne comprend un corps et un chapeau formant une enceinte, le réservoir d'expansion étant logé dans l'enceinte. Ainsi, le réservoir d'expansion et la vanne sont regroupés au sein d'un même composant. Cela permet notamment de simplifier le montage du circuit et d'en limiter l'encombrement. En outre, le nombre de composants est limité et la fiabilité du circuit améliorée. En particulier, l'étanchéité du système est rendue particulièrement sûre.
- L'obturateur est mobile à l'intérieur du corps de vanne. L'obturateur mobile est mobile par rapport au réservoir d'expansion. Le corps de vanne est fixe par rapport à un bâti du système. Typiquement, le corps de vanne est fixe par rapport aux conduits connectés à l'entrée et à la sortie de la vanne. Le réservoir d'expansion est fixe par rapport au corps de vanne lors du déplacement de l'obturateur mobile.
- Avantageusement, le réservoir d'expansion est formé au moins en partie par une paroi interne du corps de vanne. Plus précisément, le réservoir d'expansion est formé par les parois internes du corps de vanne, par la paroi interne du chapeau et par une face supérieure du corps de l'obturateur mobile. De préférence, le réservoir d'expansion est défini uniquement par les parois internes du corps de vanne, par la paroi interne du chapeau et par une face supérieure du corps de l'obturateur mobile.
- Le réservoir d'expansion est logé en partie au moins dans le chapeau. De préférence, au moins 20% et de préférence au moins 30% et de préférence au moins 50% du volume interne du réservoir d'expansion est logé dans le volume interne du chapeau. L'obturateur est distant du chapeau. Il n'est pas présent dans le chapeau.
- Selon un mode de réalisation avantageux, le réservoir d'expansion est verticalement disposé plus haut que l'obturateur mobile. Le liquide présent dans le réservoir d'expansion peut donc s'écouler par gravité vers l'obturateur mobile. De préférence, le réservoir d'expansion peut être disposé à la verticale et au-dessus de l'obturateur mobile ou ne pas être disposé à la verticale de l'obturateur mobile. Selon un mode de réalisation avantageux, le réservoir d'expansion surmonte l'obturateur mobile.
- Selon un mode de réalisation, l'obturateur mobile est distant d'une partie au moins du réservoir d'expansion. Ainsi, dans une partie au moins du réservoir d'expansion, l'obturateur mobile est absent.
- Selon un mode de réalisation, le réservoir d'expansion est distant de l'obturateur.
- Selon un mode de réalisation, le réservoir d'expansion est connecté sur la vanne en étant disposé à distance de cette dernière.
- Le réservoir d'expansion est distinct de l'obturateur. Cela permet notamment de ne pas entrainer en déplacement le réservoir d'expansion lors du déplacement de l'obturateur mobile, améliorant de ce fait la fiabilité et la robustesse du système. L'indépendance entre réservoir d'expansion est obturateur permet également de dimensionner indépendamment le réservoir d'expansion et l'obturateur mobile. En particulier, le réservoir d'expansion peut être adapté, notamment en termes de volume, aux caractéristiques du circuit (débit, pression), tout en conservant un obturateur mobile de faible dimension afin de réduire l'encombrement du système et de réaliser un obturateur mobile aux dimensions et états de surface parfaitement maîtrisés.
- Le réservoir d'expansion est configuré de manière à contenir un gaz compressé
- Avantageusement, en position fermée, le corps du boisseau empêche toute communication du liquide entre l'entrée et la sortie c'est-à-dire d'une bride à l'autre.
- Avantageusement, le système est configuré de manière à orienter le sens de fermeture du boisseau en fonction du sens de circulation du liquide dans le circuit.
- Avantageusement, en position fermée de la vanne, le passage interne du boisseau demeure en communication avec une portion de circuit séparant la vanne d'une entrée de la pompe.
- Avantageusement, le boisseau est actionné par un dispositif de commande comprenant un motoréducteur logé à l'intérieur du réservoir d'expansion. Ainsi il est situé dans l'enceinte. Avantageusement, le motoréducteur est immergé dans le gaz de compensation, réduisant de ce fait les contraintes d'étanchéité.
- Avantageusement, le système comprend une surverse pour limiter le niveau du liquide dans le réservoir d'expansion et dans lequel le motoréducteur est disposé au-dessus de la surverse. Le système est configuré de manière à ce que le niveau du liquide dans le réservoir d'expansion soit inférieur à un niveau donné, et dans lequel, le motoréducteur est disposé au-dessus de ce niveau donné.
- Avantageusement, le système comprend un dispositif disposé dans le réservoir d'expansion, sous la surverse et configuré pour briser les jets de liquide provenant du canal d'expansion.
- Avantageusement, le système comprend un dispositif de protection thermique logé à l'intérieur du réservoir d'expansion et conformé pour isoler thermiquement le motoréducteur de la chaleur du liquide.
- Avantageusement, le système comprend un palier de guidage en rotation du boisseau et dans lequel le palier est logé à l'intérieur du réservoir d'expansion. Ainsi, le palier est situé dans l'enceinte. Avantageusement, le système est configuré de manière à ce qu'en fonctionnement le palier est immergé dans le fluide. Alternativement il est immergé dans le gaz de compensation et est situé hors du fluide. Avantageusement, le palier comprend un passage permettant la circulation libre du fluide à travers le palier.
- Avantageusement, la vanne est une vanne de laminage.
- Avantageusement, l'entrée et/ou la sortie est formée par une bride configurée pour être connectée à une canalisation du circuit.

Un autre aspect de la présente invention concerne un circuit comprenant un système selon l'une quelconque des caractéristiques précédentes et une pompe apte à débiter dans deux sens opposés. De manière optionnelle et avantageuse :
- le boisseau comprend au moins un canal d'expansion pour le passage du liquide débouchant dans un passage interne du boisseau pour mettre en communication le réservoir d'expansion et le circuit, le circuit étant configuré de manière à orienter le sens de fermeture du boisseau en fonction du sens de circulation du liquide dans le circuit.
- le circuit est configuré de sorte à ce que, lors de la fermeture de la vanne, le boisseau soit tourné de manière à ce que le passage interne demeure en communication avec une portion de circuit séparant la vanne d'une entrée de la pompe.
- le circuit comprend une unique vanne. Ainsi la perte de charge est limitée par rapport aux circuits comprenant deux vannes pour assurer le fonctionnement réversible du circuit. La plage de débit admissible est donc plus importante.

Un autre aspect de la présente invention concerne l'utilisation du système selon l'invention pour réguler la circulation d'un liquide présentant une température supérieure ou égale à 350°C et de préférence supérieure ou égale à 400°C.

De préférence, l'invention est utilisée pour réguler la circulation de sodium liquide destiné à assurer le transfert de chaleur dans un circuit de réacteur nucléaire à caloporteur sodium.

Les autres objets, caractéristiques et avantages de la présente invention apparaîtront à l'examen de la description suivante et des dessins d'accompagnement. Il est entendu que d'autres avantages peuvent y être incorporés.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 est un schéma représentant un premier circuit selon l'art antérieur dans lequel le liquide circule dans un premier sens.
La FIGURE 2 est un schéma du circuit illustré en figure 1 et dans lequel le liquide circule dans un deuxième sens opposé au premier.
Les FIGURES 3 et 4 sont des schémas représentant un deuxième circuit selon l'art antérieur dans lequel le liquide circule respectivement dans un premier sens et dans un deuxième sens.
Les FIGURES 5 et 6 sont des schémas représentant un troisième circuit selon l'art antérieur dans lequel le liquide circule respectivement dans un premier sens et dans un deuxième sens.
La FIGURE 7 est un schéma représentant un exemple de circuit équipé d'un système selon un mode de réalisation de l'invention.
La FIGURE 8 est une vue en perspective d'un corps de vanne d'un système selon un premier exemple de réalisation de l'invention.
La FIGURE 9 est une vue de côté du corps de vanne illustré en figure 8.
La FIGURE 10 est une vue en coupe simplifiée d'un système selon un premier exemple de réalisation de l'invention.
La FIGURE 11 est une vue en perspective d'un boisseau cylindrique équipant le système selon l'exemple de réalisation de l'invention illustré en figure 10.
La FIGURE 12 est une vue en coupe du boisseau illustré en figure 11.
La FIGURE 13 est une vue selon la coupe BB du système selon l'exemple de réalisation de l'invention illustré en figure 10, dans lequel la vanne est pleinement ouverte.
La FIGURE 14 est une vue selon la coupe CC du système dans la configuration illustrée en figure 13.
La FIGURE 15 est une vue agrandie de la figure 14, centrée sur la coopération entre le corps de la vanne et le boisseau.
La FIGURE 16 est une vue selon la coupe BB du système selon l'exemple de réalisation de l'invention illustré en figure 10, dans lequel la vanne est pleinement fermée dans un deuxième sens.
La FIGURE 17 est une vue selon la coupe DD du système dans la configuration illustrée en figure 16.
La FIGURE 18 est une vue en perspective d'un corps de vanne d'un système selon un deuxième exemple de réalisation de l'invention.
La FIGURE 19 est une vue du dessus du corps de vanne illustré en figure 18.
La FIGURE 20 est une vue en perspective d'un boisseau cylindrique équipant un système selon le deuxième exemple de réalisation de l'invention.
La FIGURE 21 est une vue en coupe du boisseau illustré en figure 20.
La FIGURE 22 est une vue en coupe simplifiée d'un système selon le deuxième exemple de réalisation de l'invention.
La FIGURE 23 est une vue selon la coupe BB du système selon l'exemple de réalisation de l'invention illustré en figure 22, dans lequel la vanne est pleinement ouverte.
La FIGURE 24 est une vue selon la coupe BB du système selon l'exemple de réalisation de l'invention illustré en figure 22, dans lequel la vanne est pleinement fermée dans un premier sens.
La FIGURE 25 est une vue selon la coupe CC du système dans la configuration illustrée en figure 24.
La FIGURE 26 est une vue selon la coupe BB du système selon l'exemple de réalisation de l'invention illustré en figure 22, dans lequel la vanne est pleinement fermée dans un deuxième sens.
La FIGURE 27 est une vue selon la coupe DD du système dans la configuration illustrée en figure 26.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions et épaisseurs relatives des différentes pièces, parois et organes ne sont pas représentatives de la réalité.

### DESCRIPTION DÉTAILLÉE DE L'INVENTION

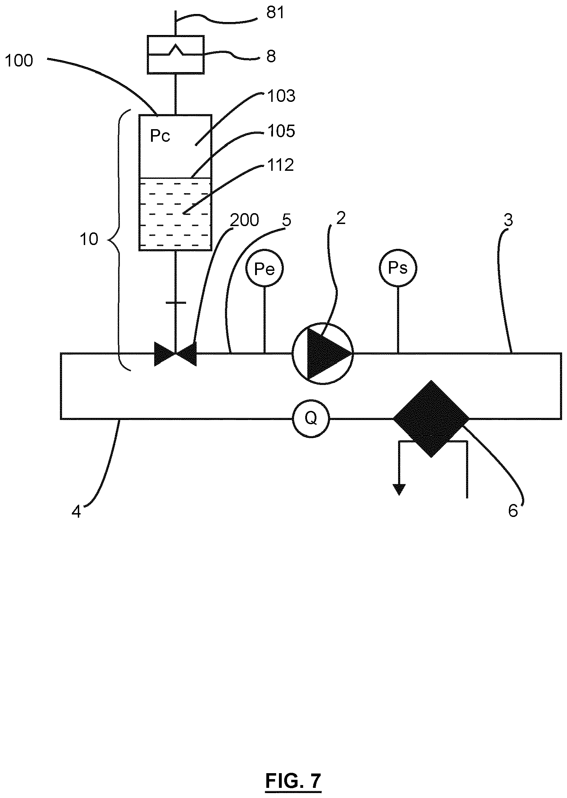

Un exemple de circuit intégrant un système selon l'invention va maintenant être décrit en référence à la **figure 7****.**

Dans cet exemple, le circuit 1 comprend une pompe 2, de préférence réversible, un échangeur 6 et un système 10 selon l'invention comprenant une vanne 200. Ces trois éléments sont disposés en série. Ils forment un circuit fermé et sont fluidiquement connectés entre eux par des tronçons 3, 4, 5 de canalisation. Le tronçon 3 relie la pompe 2 à l'échangeur 6, le tronçon 4 relie l'échangeur 6 à la vanne 200 du système 10 et le tronçon 5 relie la vanne 200 du système 10 à la pompe.

Dans le cadre de la présente invention, on qualifie de circuit 1 le circuit fermé comprenant la pompe 2 et comprenant de préférence l'échangeur 6 ou tout autre organe(s) ainsi que la vanne 200 du système 10. D'autres éléments peuvent naturellement être incorporés au système 10. Par ailleurs, l'échangeur 6 peut être remplacé par un autre composant ou plusieurs autres composants.

La pompe 2 est réversible ce qui lui permet d'avoir pour entrée et pour sortie, respectivement les tronçons 5 et 3 ou inversement pour entrée et pour sortie respectivement les tronçons 3 et 5. La vanne 200 comprend une sortie et une entrée qui s'inversent en fonction du sens de circulation du liquide.

De manière particulièrement avantageuse, le système 10 comprend un réservoir d'expansion 100 permettant de compenser les variations de volume du liquide présent dans le circuit et qui sont dues aux variations de température du liquide. Le réservoir d'expansion 100 est connecté à la vanne 200 montée en série sur le circuit 1. Ainsi, le réservoir d'expansion 100 n'est pas connecté en série sur le circuit 1 comprenant la pompe 2 et la vanne 200. Il est connecté en dérivation par l'intermédiaire de la vanne 200.

La vanne 200 est configurée pour permettre une communication permanente entre le circuit 1 et le réservoir d'expansion 100. Ainsi, quelle que soit la position du boisseau 210 de la vanne 200, le réservoir d'expansion 100 communique avec au moins l'un des tronçons 4 ou 5 du circuit.

De manière particulièrement avantageuse, cela permet d'améliorer considérablement la fiabilité du système 10 puisqu'il n'est alors plus nécessaire de piloter avec précision des vannes d'isolement d'un ou plusieurs réservoirs comme dans la solution illustrée en figures 3 et 4. En outre, il est possible de n'avoir qu'une seule vanne de laminage formée par la vanne 200. Cela permet de réduire la perte de charge inévitablement induite par la présence de vannes additionnelles comme cela est le cas dans la solution illustrée sur les figures 5 et 6. Notamment, l'invention ne nécessite pas la présence d'une vanne de laminage 91 sur le tronçon 3 entre l'échangeur 6 et la pompe 2. L'invention permet ainsi d'élargir la plage des débits admissibles. En plus de simplifier le pilotage du réservoir d'expansion 100, l'invention permet de réduire significativement le nombre de composants nécessaires et notamment le nombre de composants de pilotage, ce qui permet d'améliorer la fiabilité du circuit 1 et d'en diminuer le coût.

Le réservoir d'expansion 100 peut être connecté sur la vanne 200 en étant disposé à distance de cette dernière. Dans un mode de réalisation préféré, le réservoir d'expansion 100 et la vanne 200 sont au contraire regroupés au sein d'un même composant. Cela permet notamment de simplifier le montage du circuit et d'en limiter l'encombrement. De manière plus avantageuse encore, cela permet de rapprocher le réservoir d'expansion 100 du circuit 1 et d'améliorer ainsi la réactivité du réservoir d'expansion 100 et d'un dispositif de protection 8 contre les surpressions associé au réservoir d'expansion 100. De manière avantageuse, les portions de réservoir d'expansion comprenant le liquide 112 et le gaz de pressurisation 103 présentent des diamètres sensiblement identiques.

Préférentiellement, le réservoir d'expansion 100 surmonte la vanne 200 et communique avec le liquide du circuit par un canal, désigné canal d'expansion 213, porté au moins en partie par le boisseau 210. De manière également avantageuse, la vanne 200 comprend un corps 201 et un chapeau 101 formant à tous les deux une enceinte 102, le réservoir d'expansion 100 étant logé à l'intérieur de cette enceinte 102.

Ainsi, l'obturateur mobile est distinct du réservoir d'expansion 100, ce dernier étant fixe par rapport au corps 201 de vanne 200. L'obturateur mobile est mobile par rapport au réservoir d'expansion.

Dans les modes de réalisation non limitatifs illustrés sur les figures qui sont décrites ci-dessous, le réservoir d'expansion 100 est verticalement disposé au-dessus de l'obturateur mobile. Plus précisément, le réservoir d'expansion 100 surmonte l'obturateur mobile. Le réservoir d'expansion est formé par les parois internes du corps 201 de vanne 200, par la paroi interne du chapeau 101 et par une face supérieure 214 du corps de l'obturateur mobile. Ainsi, le réservoir d'expansion est logé en partie au moins dans le chapeau. De préférence, au moins 20% et de préférence au moins 30% et de préférence au moins 50% du volume interne du réservoir d'expansion 100 est logé dans le volume interne du chapeau 101.

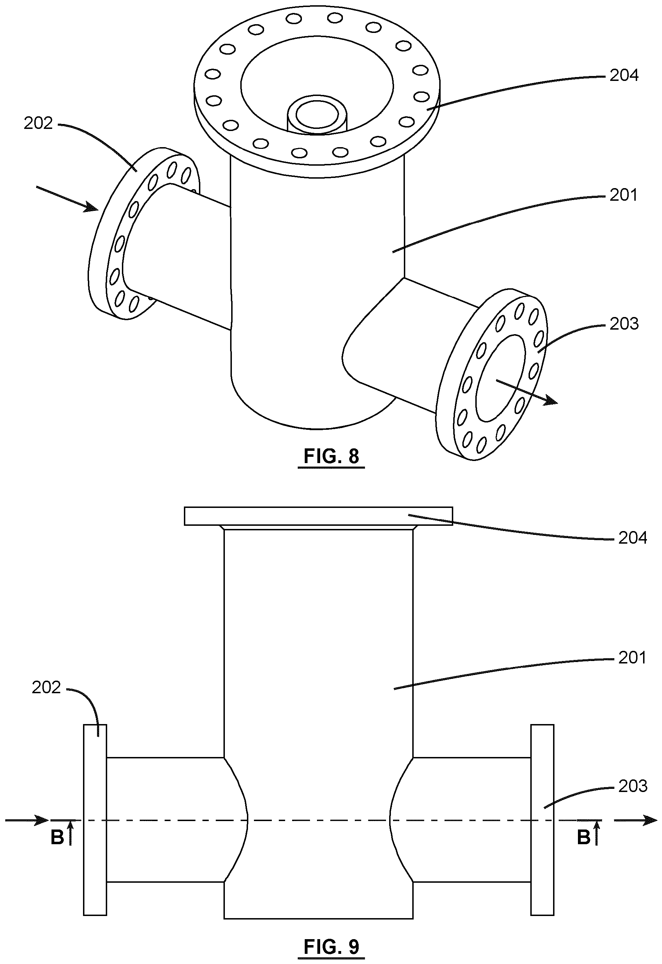

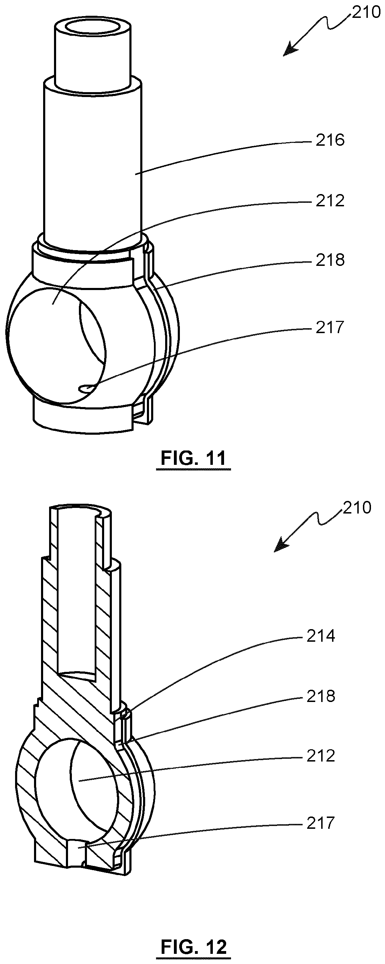

Un premier exemple de système 10 selon l'invention va maintenant être décrit en détail en référence aux **figures 8 à 17****.**

Dans l'exemple qui suit, la vanne 200 est une vanne de laminage ou une vanne permettant de faire circuler ou d'interrompre la circulation du liquide à l'intérieur du circuit 1.

Les **figures 8 et 9** représentent le corps 201 de vanne à l'intérieur duquel le boisseau 210 par exemple cylindrique, est mobile pour réguler le passage du liquide d'une bride à l'autre de la vanne 200. Pour un sens de circulation du fluide, la bride 202 forme l'entrée de la vanne et la bride 203 forme la sortie de la vanne. Entrée et sortie sont naturellement inversées en cas d'inversion du sens de circulation. Sur l'exemple illustré, les brides 202, 203 sont destinées à être connectées à une tuyauterie par boulonnage sans que cela soit limitatif. En effet, une fixation par soudage est envisageable, notamment pour les applications dans lesquelles le liquide est un métal liquide tel du sodium comme c'est le cas dans les réacteurs nucléaires à caloporteur sodium.

Dans l'exemple qui suit, la vanne est une vanne en ligne, l'entrée et la sortie étant sensiblement coaxiales. Les tronçons 4 et 5 sont alors disposés dans le prolongement l'un de l'autre. Par ailleurs, le boisseau est sphérique.

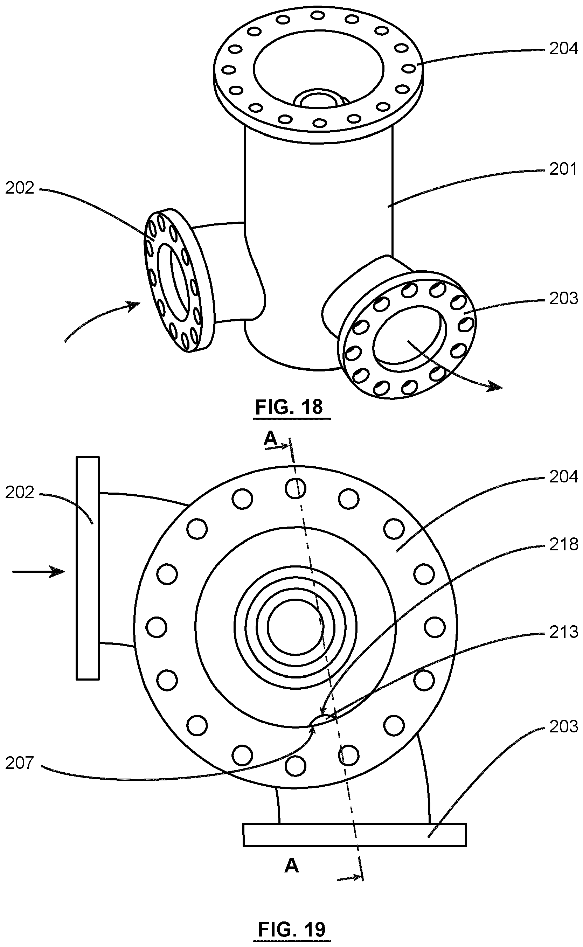

Comme cela sera illustré par la suite en référence aux figures 18 à 27, l'invention couvre également les vannes 200 à boisseau qui sont coudées. Elle couvre également les boisseaux cylindriques.

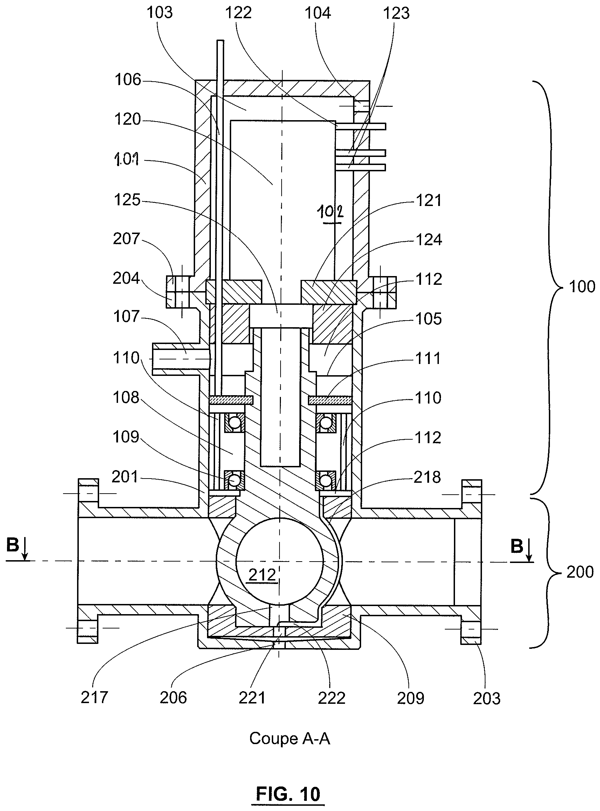

Comme illustré sur les **figures 10****,** **11 et 12****,** le boisseau 210 présente un corps 211 qui comporte un passage interne 212 pour le liquide. Ce passage interne 212 permet de mettre en communication l'entrée et la sortie du liquide pour certaines positions angulaires au moins du boisseau 210 par rapport au corps 201 de vanne. Comme dans toutes vannes à boisseau, la forme et la dimension de l'intérieur du corps 201 de vanne et du corps 211 du boisseau sont choisies de manière à ce que le liquide ne puisse s'écouler d'une bride à l'autre qu'au travers du passage interne 212 porté par le corps 211 du boisseau 210. De préférence, le corps de vanne comprend un siège 209 conformé pour accueillir le boisseau sphérique. Le siège 209 est solidaire du corps 201 de vanne 200.

La position angulaire du boisseau par rapport au corps 201 de vanne donc par rapport aux brides d'entrée 202 et de sortie 203, est commandée par un dispositif de commande comprenant typiquement un actionneur, par exemple un motoréducteur 120.

Le corps 201 de vanne et le chapeau 101 forment une enceinte 102 à l'intérieur de laquelle est logé le réservoir d'expansion 100. Cette enceinte 102 est étanche à l'exception d'un canal 213 de communication entre le réservoir d'expansion 100 et l'une des brides, comme cela sera décrit ultérieurement, et éventuellement à l'exception d'une surverse 107, d'un orifice 104 pour la gestion des gaz de pressurisation qui seront également décrits plus en détail par la suite.

De manière particulièrement avantageuse, le corps 211 du boisseau comporte au moins en partie un canal 213 permettant au liquide circulant à l'intérieur du circuit et provenant de l'une des deux brides 202, 203, de pénétrer à l'intérieur du réservoir d'expansion 100 formé par l'enceinte 102. Il est ainsi qualifié de canal d'expansion 213.

Le corps 211 du boisseau 210 comprend au moins une ouverture latérale située sur une face latérale 219 du boisseau. La vanne 200 est conformée pour assurer une communication permanente entre ladite ouverture latérale et le réservoir d'expansion 100. Sur l'exemple illustré, l'ouverture latérale forme un évidement 218 qui s'étend depuis l'intérieur du circuit jusqu'au réservoir d'expansion 100.

De préférence, cet évidement 218 s'étend depuis une face supérieure du corps 211 du boisseau jusqu'à la face inférieure 220 du boisseau 210.

Avantageusement, l'évidement 218 forme une rainure. La vanne est conformée de manière à ce que au moins lorsque la vanne est fermée l'évidement 218 est en communication directe avec le liquide provenant de l'entrée ou de la sortie de la vanne 200. Sur la figure 10, l'évidement 218 communique avec le liquide passant par la bride 203. Ainsi, lorsque le passage interne 212 ne communique pas directement avec l'entrée ou la sortie de la vanne, le liquide présent dans l'entrée ou la sortie de la vanne peut donc communiquer avec le réservoir d'expansion 100 en entrant dans le canal d'expansion 213 par l'évidement 218.

Par ailleurs, la vanne est conformée de manière à ce que au moins lorsque la vanne 200 est ouverte au moins partiellement, c'est-à-dire lorsque le passage interne 212 communique directement avec l'entrée et/ou la sortie de la vanne, l'évidement 218 coopère avec la paroi interne 207 du siège 209 de manière à former un conduit dont la section, prise perpendiculairement à l'écoulement du liquide dans le conduit forme un pourtour fermé. Ce conduit est en communication d'une part avec le réservoir d'expansion 100 et d'autre part avec le passage interne 212. De préférence, ce conduit débouche d'une part dans le réservoir d'expansion 100 et débouche d'autre part dans un espace 221 formé par une face inférieure 220 du boisseau 210 et le fond 208 du corps 201. Dans le mode de réalisation illustré et dans lequel le corps 201 comprend un siège 209, le fond 208 délimitant avec la face inférieure 220 du boisseau sphérique l'espace 221 est le fond du siège 209. Cet espace 221 est en communication avec le passage interne 212 par un canal 217, typiquement un trou, pratiqué dans le boisseau 210. Dans l'exemple non limitatif illustré, cet espace 221 est formé par une rainure 222 pratiquée sur la face inférieure 220 du corps 211 du boisseau 210 et qui coopère avec le fond 208 du siège 209 pour définir un passage pour le liquide.

Un canal d'expansion formant un évidement 218 ou une rainure sur la face latérale du corps 211 du boisseau 210 permet avantageusement de simplifier la réalisation du boisseau.

Cet exemple n'est cependant pas limitatif. L'invention s'étend aux modes de réalisation dans lesquels le canal d'expansion forme un conduit présentant une ouverture latérale qui ne forme par une rainure. Par ailleurs, l'invention s'étend aux modes de réalisation dans lesquels le canal d'expansion forme un conduit, typiquement un trou, qui communique directement entre l'ouverture latérale et le passage interne 212.

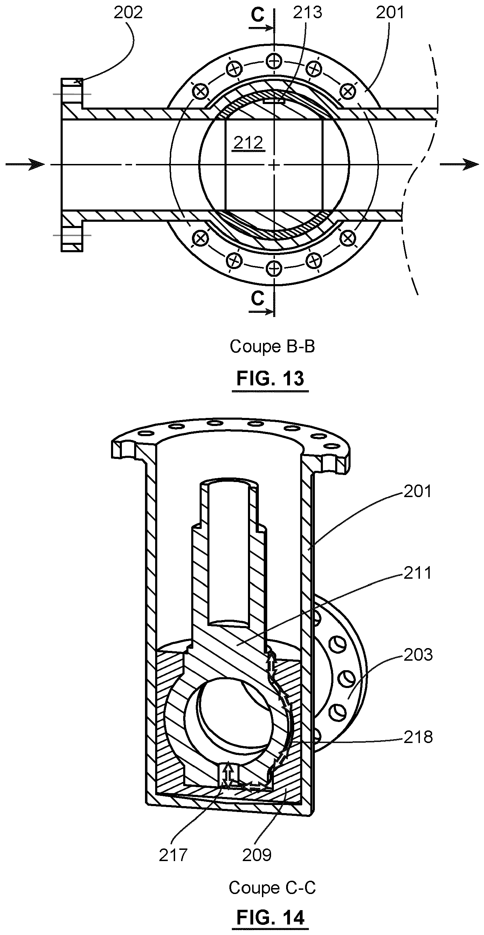

Ainsi, la vanne 200 est conformée de manière à ce que, quelle que soit la position du boisseau 210, le canal d'expansion 213 soit toujours en communication avec l'entrée ou la sortie de la vanne 200. Soit l'ouverture latérale communique directement avec l'entrée ou la sortie de la vanne, soit elle communique avec le passage interne 212, de préférence via l'espace 211, lorsque le passage interne 212 communique avec l'entrée ou la sortie de la vanne. Du liquide peut donc en permanence atteindre le réservoir d'expansion 100 formé par l'enceinte 102. Cela sera décrit plus en détail en référence aux figures 13 à 17.

Le volume d'expansion est le volume de liquide 112 situé entre la face supérieure 214 du boisseau 210 et la surface libre 105 du liquide.

Le boisseau 210 représente une perte de charge variable. La communication entre le circuit et le réservoir d'expansion 100 se fait par un chemin qui est toujours à l'extérieur du tronçon pompe-perte de charge induite par le boisseau 210. Ainsi, quelle que soit la position du réservoir d'expansion 100 dans le circuit, le réservoir d'expansion 100 ne voit jamais la pression délivrée par la pompe contrairement au réservoir d'expansion du circuit illustré en figure 2 qui est en communication directe avec la sortie de la pompe. Par ailleurs, dans le circuit de la figure 2 le réservoir d'expansion 100 impose la pression entre la vanne et un composant tel que l'échangeur.

De préférence, et comme illustré en figure 10, un palier 108 muni de roulements 109 est prévu pour assurer le guidage en rotation du boisseau 210. De préférence, le palier 108 guide le boisseau 210 au niveau d'un axe 216 du boisseau 210 solidaire du corps 211 du boisseau et qui s'étend selon la direction de rotation de ce dernier. De préférence, le palier 108 est situé à proximité immédiate de la face supérieure 214 du boisseau 200 formant un cylindre dans sa partie supérieure. On prévoit dans le palier 108 un passage 110 pour le liquide provenant du passage interne 212 porté par le corps 211 du boisseau. Selon un mode de réalisation alternatif non illustré, si le palier 108 est logé dans le corps 201 de vanne, un passage peut être pratiqué dans l'épaisseur de la paroi du corps 201 de vanne pour permettre au liquide de passer depuis la face supérieure 214 du corps 211 du boisseau jusqu'à un espace situé au-dessus du palier.

Ainsi en fonctionnement, le palier 108 est immergé dans le liquide 112 présent dans le réservoir d'expansion 100.

Avantageusement, un dispositif brise-jet 111 est prévu pour éviter les projections de liquide provenant du canal d'expansion 213 avec une vitesse importante. Sur cet exemple, un brise-jet 111 est placé au-dessus du palier 108. En fonctionnement normal, le brise-jet 111 est immergé et la surface libre 105 du liquide 112 est située au-dessus du brise-jet 111.

Une surverse 107 est également prévue pour évacuer un éventuel trop-plein de liquide. En fonctionnement normale, la surface libre 105 du liquide 112 est donc située en-dessous de la surverse 107.

Dans l'enceinte 102 formée par le corps 201 de la vanne 200 et le chapeau 101, et au-dessus de la surface libre 105 du liquide 112, se trouve le gaz de pressurisation 103 également désigné gaz de ciel, dont la fonction est de compenser les variations volumiques du liquide dans le circuit et d'assurer que la pression du circuit demeure dans un intervalle acceptable de fonctionnement.

Un orifice 104 est aussi prévu pour la gestion de la pression du gaz de pressurisation 103. Cet orifice 104 est situé de préférence en partie supérieure du chapeau 101.

De manière avantageuse mais optionnelle, le système comprend également un dispositif de protection 8, de préférence connecté à l'orifice 104 de gestion des gaz, et configuré pour réguler et limiter la pression du gaz dans le réservoir d'expansion 100 et donc la pression du liquide dans le circuit lorsque ce dernier franchit une valeur seuil qui pourrait endommager le circuit. Lorsque le dispositif de protection 8 s'active, la surpression de gaz est dirigée vers un exutoire 81 évitant le dépassement d'une pression limite admissible pour le réservoir d'expansion et le circuit.

Comme indiqué précédemment, un dispositif de commande est prévu pour commander la position angulaire du boisseau 210 par rapport au corps 201 de vanne. On notera ici que la position angulaire du boisseau 210 est parfaitement indépendante de la pression qui règne à l'intérieur du circuit et de la pression qui règne à l'intérieur du réservoir d'expansion 100.

Selon un mode de réalisation particulièrement avantageux, on prévoit que ce dispositif de commande soit logé à l'intérieur de l'enceinte 102 et que, de préférence également, l'accouplement entre le boisseau 210 et le dispositif de commande soit logé également à l'intérieur de l'enceinte 102. Ainsi, l'invention permet de réduire considérablement les contraintes d'étanchéité, améliorant de ce fait la fiabilité du système 10.

Plus précisément, le dispositif de commande comprend un moteur, typiquement un motoréducteur 120, de préférence logé dans l'enceinte 102 au-dessus de la surverse 107. Il est donc immergé dans le gaz de pressurisation en étant avantageusement éloigné du liquide 112. Un dispositif d'accouplement 125 entre la sortie du motoréducteur 120 et le boisseau 210 est également situé au-dessus de la surverse 107 et donc immergé dans le gaz de pressurisation 103 tout en étant éloigné du liquide 112. L'axe 216 du boisseau 210 relie le dispositif d'accouplement 125 au corps 211 du boisseau. De préférence, le motoréducteur 120 est disposé de sorte à ce que son axe de sortie soit coaxial avec l'axe 216 de rotation du boisseau 210.

De manière avantageuse, un dispositif de protection thermique 124 est disposé entre le liquide 112 et le motoréducteur 120 de manière à préserver ce dernier de la chaleur du liquide 112. Cela est d'autant plus avantageux lorsque le liquide est un métal liquide tel que le sodium. Le dispositif de protection thermique 124 peut par exemple être un empilement de disques de faibles épaisseurs et espacés entre eux ou tout autre volume ou association de sous-ensembles présentant une faible conductivité thermique. De préférence, le dispositif de protection thermique 124 est disposé autour du dispositif d'accouplement 125 comme cela est illustré en figure 10.

De préférence, le moteur est fixé sur un support 121 conformé pour se fixer sur une partie supérieure du corps 201 de vanne, par exemple au niveau de l'ouverture du corps 201 de vanne. Une fois le moteur fixé sur le corps 201 de vanne, le chapeau 101 peut ensuite être positionné sur le corps 201 de vanne pour recouvrir le moteur et former l'enceinte étanche 102. Le montage du système 10 est donc particulièrement simple. Par exemple, la solidarisation entre le corps 201 de vanne et le chapeau 101 s'effectue par boulonnage de deux brides 204, 207 portées respectivement par le corps 201 de vanne et le chapeau 101.

Lorsque le liquide est porté à une température élevée, comprise typiquement entre 300 et 500°C comme dans le cas du sodium liquide, le système 10 comprend avantageusement un circuit de refroidissement 123 du moteur. Un fluide caloporteur circule alors dans des tuyaux traversant l'enceinte 102 et pénètre dans le moteur. De préférence, des trous de passage de ces tuyaux sont pratiqués dans le chapeau 101.

L'enceinte 102, de préférence la paroi du chapeau, comprend également un trou de passage pour un ou des lignes d'alimentation 122 du moteur.

Le système 10 peut également comprendre une ou plusieurs sondes de niveau 106 pour mesurer et contrôler le niveau de liquide dans le réservoir d'expansion 100. Un trou peut être pratiqué dans l'enceinte 102, typiquement dans la paroi du chapeau 101, pour le passage des sondes 106.

De préférence, le corps de vanne présente un trou de vidange 206 pratiqué dans le fond 209 du corps 201 et permettant de faciliter la vidange du système 10 intégrant la vanne 200 et le réservoir d'expansion 100.

L'invention propose ainsi un système 10 intégrant au sein d'un même composant une vanne 200, en particulier une vanne en ligne, et un réservoir d'expansion 100 en communication permanente avec le liquide du circuit et dont la conception offre une fiabilité de fonctionnement améliorée, une étanchéité particulièrement simple et efficace, ainsi qu'un assemblage aisé.

Le fonctionnement de l'invention va maintenant être décrit en détail en référence aux **figures 13 à 17****.**

Les **figures 13 à 15** illustrent la vanne 200 en position pleinement ouverte. Dans cette position, le boisseau 210 est équivalent à la portion de canalisation que la vanne 200 remplace dans le circuit 1. La perte de charge dans la vanne 200 est très faible voire nulle ce qui est un avantage par rapport aux autres vannes avec obturateur translatif. Dans cette position la circulation du liquide est possible dans les deux sens.

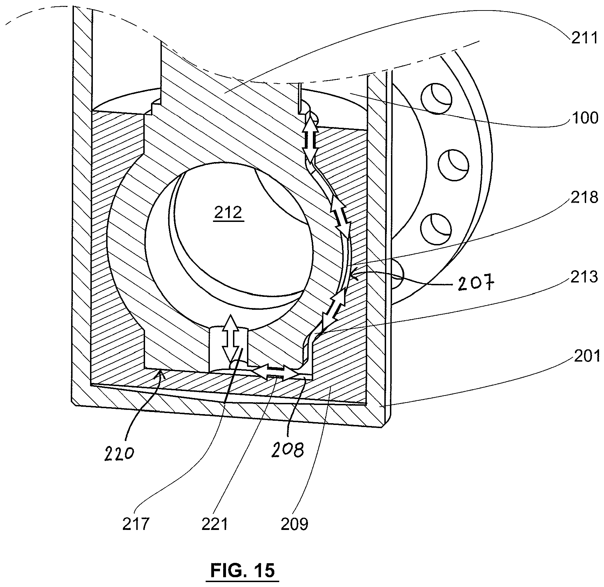

Par ailleurs, comme cela apparaît clairement sur la figure 15, le passage interne 212 est en communication avec le liquide du circuit. Le liquide peut donc passer par le canal inférieur 217, parvenir dans l'espace 221 pour gagner le conduit formé par l'évidement 218 et la paroi interne solidaire du corps. Depuis ce conduit, le liquide peut parvenir au réservoir d'expansion 100.

Ainsi, le canal d'expansion 213 alors formé par le canal inférieur 217, l'espace 221 et l'évidement 218 permet la communication du liquide circulant dans le circuit 1 avec le liquide 112 contenu dans le réservoir d'expansion 100.

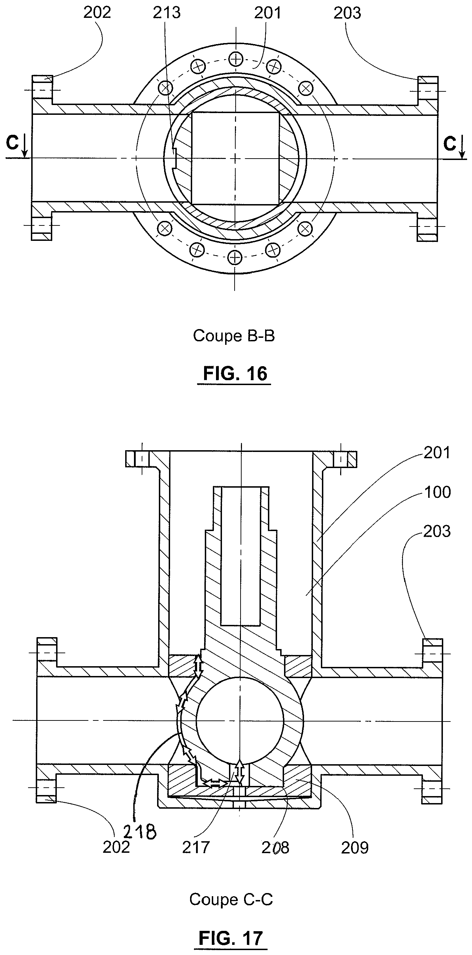

Lorsque la vanne 200 est fermée, comme illustré en figures 16 et 17, la circulation du liquide dans le circuit 1 est interrompue. Le passage interne 212 n'est plus en communication avec le tronçon de circuit connecté à la bride 202, ni même à celui connecté à la bride 203. L'évidement 218 forme une ouverture débouchant dans le circuit. Le liquide peut donc parvenir directement dans l'évidement 218 depuis l'entrée ou la sortie de la vanne. Sur l'exemple illustré, l'évidement 218 est disposé directement au regard de la bride 202. L'évidement débouchant dans le réservoir d'expansion 100, ce dernier est donc en communication avec le liquide. Tel sera le cas pour toutes les positions angulaires du boisseau dans lesquelles l'évidement 218 est directement accessible par le liquide présent dans une section comprise entre le boisseau 210 et une bride 202, 203.

Par l'intermédiaire du canal d'expansion 213, le réservoir d'expansion 100 demeure donc en communication avec le liquide présent dans le tronçon connecté sur cette bride 202 comme cela apparaît en figure 15. On privilégiera cette position de la vanne 200 lorsque la bride 202 est connectée à un tronçon formant l'entrée de la pompe 2 ou à proximité de l'entrée de la pompe 2. Ainsi, en cas de baisse de pression en entrée de pompe 2, le réservoir d'expansion 100 permet une compensation du volume et évite ainsi une cavitation en entrée de pompe.

Ainsi, il est préférable de veiller à adapter l'orientation angulaire du boisseau 210 en fonction du sens de circulation du liquide. De manière générale, on commandera la position du boisseau 210 de manière à mettre en communication le réservoir d'expansion 100 avec la portion du circuit 1 séparant le réservoir d'expansion 100 de l'entrée de la pompe 2.

En plus de permettre une communication permanente entre le réservoir d'expansion 100 et le liquide du circuit, l'invention permet de limiter la vitesse du liquide parvenant dans le réservoir d'expansion 100, en particulier lorsque la vanne est ouverte et que le liquide la traverse avec une vitesse élevée. Or, du fait de la vitesse de déplacement du liquide dans le circuit 1, du liquide pourrait parvenir avec une vitesse relativement élevée dans le réservoir d'expansion 100 si la communication était directe. L'invention permet ainsi de limiter voire d'empêcher l'apparition dans le réservoir d'expansion 100 de jets de liquide provenant du liquide en mouvement dans le circuit 1. Or, ces jets peuvent être source de fatigue mécanique et de difficultés de contrôle-commande. En effet, ces projections de liquide induisent des fluctuations significatives du niveau de la surface libre 105 du liquide 112 et dans le réservoir d'expansion 100. Ces jets de liquide peuvent également être source de génération d'aérosols dont on souhaite éviter autant que possible la formation pour renforcer la fiabilité du mécanisme. La limitation des aérosols est très avantageuse. Sans cela, les aérosols peuvent se retrouver dans le gaz de pressurisation 103 (gaz de ciel) et viennent au niveau du motoréducteur 120. Cela en réduit la fiabilité. La limitation des aérosols améliore significativement la fiabilité du mécanisme. Par ailleurs les aérosols peuvent venir imprégner la protection thermique 124 et donc augmenter significativement sa conductivité thermique. Cela aurait pour conséquence d'augmenter la température de toutes les parties mécaniques qui sont au-dessus de la protection thermique 124, dont le motoréducteur 120, et donc en réduirait la fiabilité.

Un deuxième exemple de système 10 selon l'invention va maintenant être décrit en détail en référence aux **figures 18 à 27****.**

Le système selon ce deuxième exemple diffère du système selon le premier exemple décrit en référence aux **figures 8 à 17** en ce que le boisseau est cylindrique et en ce que la vanne est coudée. Les autres caractéristiques décrites à propos du premier exemple étant toutes applicables à ce deuxième exemple.

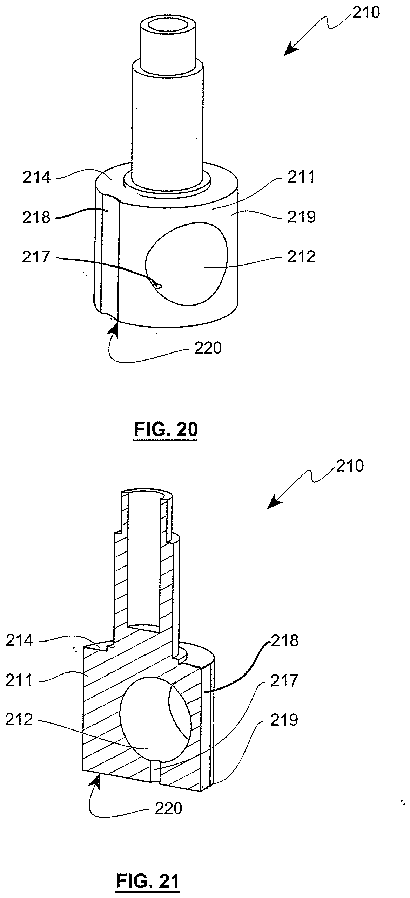

Dans ce deuxième exemple, le canal d'expansion 213 est également configuré pour limiter l'apparition dans le réservoir d'expansion 100 de jets de liquide provenant du liquide en mouvement dans le circuit 1. En effet, le canal d'expansion 213 de ce deuxième mode de réalisation n'offre pas un cheminement rectiligne au liquide, génère des pertes de charge et réduit la vitesse du liquide lors de son entrée dans le réservoir d'expansion 100. Comme sur l'exemple précédent, le canal d'expansion 213 comporte au moins :
- un canal inférieur 217 débouchant d'une part dans le passage interne 212 et d'autre part sous une face inférieure 220 du corps 211 du boisseau. Plus précisément, le canal inférieur 217 débouche dans un espace 221 défini par la face inférieure 220 du corps 211 du boisseau et par le fond 208 du corps 201 de la vanne. La vanne étant cylindrique, il est préférable de se passer d'un siège 209 pour accueillir le boisseau 210. ;
- un évidement 218 est pratiqué sur une face latérale 219 du corps 211 du boisseau, cet évidement débouchant d'une part sous la face inférieure 220 et d'autre part dans le réservoir d'expansion 100. Cet évidement 218 forme de préférence une rainure. Dans le cas où le boisseau 210 est cylindrique, et comme illustré sur les figures 20 et 21, cette rainure est de préférence linéaire et s'étend selon une direction parallèle à l'axe de rotation du boisseau 210.

L'évidement 218 pratiqué sur la face latérale 219 du corps 211 du boisseau forme ainsi un canal ouvert. Lorsque cet évidement 218 est disposé au regard du corps 201 de vanne, plus précisément au regard de sa paroi interne 207, il coopère avec cette dernière de manière à former un canal. De préférence, la section de ce canal forme un pourtour. La section est prise selon un plan perpendiculaire à la direction d'écoulement du liquide dans ce canal. Ce canal présente alors deux ouvertures, l'une débouchant sous la face inférieure 220 du corps 211 du boisseau, l'autre débouchant dans le réservoir d'expansion 100.

La **figure 19** fait apparaître clairement l'ouverture au niveau du réservoir d'expansion 100 de ce canal fermé formé par l'évidement 218 et la paroi interne 207 du corps 201 de vanne. La vanne 200 est configurée pour que le liquide présent dans le passage interne 212 puisse passer dans le passage inférieur 217 puis dans l'évidement 218 pour atteindre le réservoir d'expansion 100. Entre le canal inférieur 217 et l'évidement 218, le liquide transite par l'espace 221.

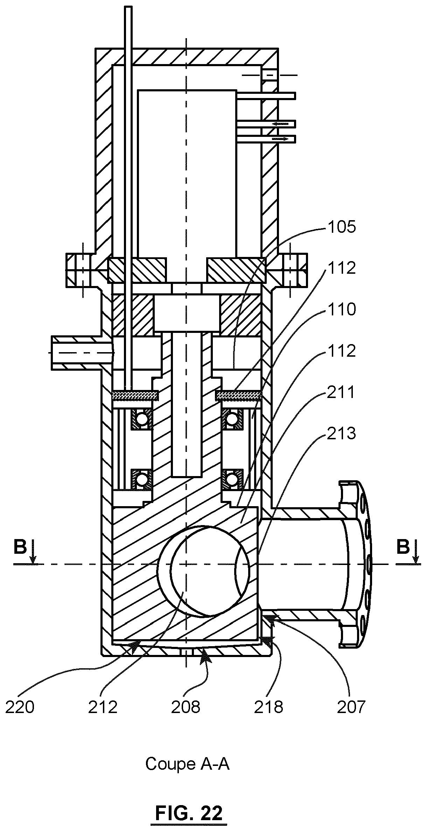

Sur la **figure 22****,** le canal d'expansion 213 apparaît entre le fond de l'évidement 218 et la paroi interne du corps 201 de vanne. Les autres caractéristiques du système sont identiques à celles décrites notamment en référence à la **figure 10****.**

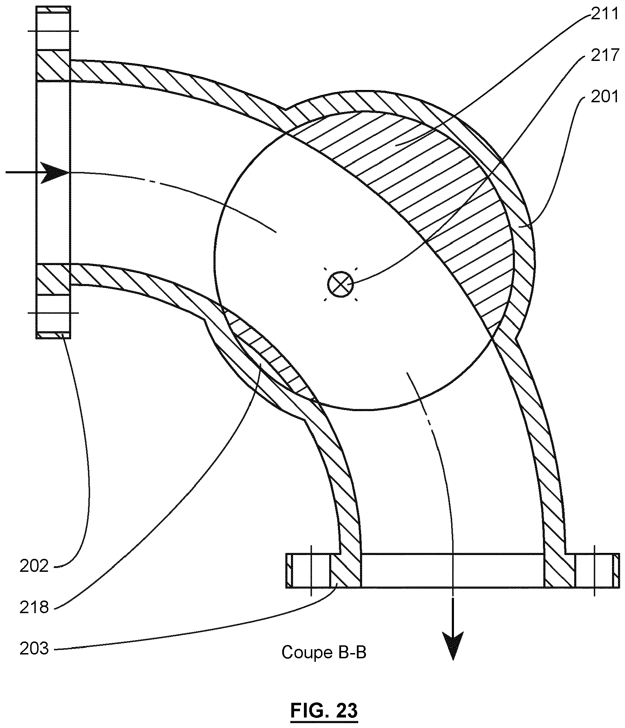

Le fonctionnement du système selon ce mode de réalisation va maintenant être décrit en détail en référence aux **figures 23 à 27****.**

La **figure 23** illustre la vanne 200 en position pleinement ouverte. Dans cette position, le boisseau 210 est équivalent à la portion de coude que la vanne 200 remplace dans le circuit 1. La perte de charge dans la vanne 200 est très faible voire nulle. Plus généralement elle est identique au coude que cette vanne remplace. Dans cette position, la circulation du liquide est possible dans les deux sens. Le liquide présent dans le passage interne 212 communique avec le canal inférieur 217 pour atteindre l'espace formé entre la face inférieure 208 du corps 211 de boisseau et le fond 220 du corps 201 de vanne. Le liquide parvient ensuite dans le canal fermé défini par la coopération entre l'évidement 218 et la paroi interne 207 du corps 201 de vanne. Il peut ainsi entrer dans le réservoir d'expansion 100. Le cheminement du liquide dans le canal d'expansion 213, formé par le canal inférieur 217, l'espace 221 et l'évidement 218, permet de limiter la vitesse du liquide en entrée du réservoir d'expansion 100 et de limiter la formation de jets de liquide dans ce dernier. Cela est d'autant plus avantageux que dans cette position angulaire du corps 211 du boisseau, la vitesse du liquide traversant la vanne 200 est habituellement importante.

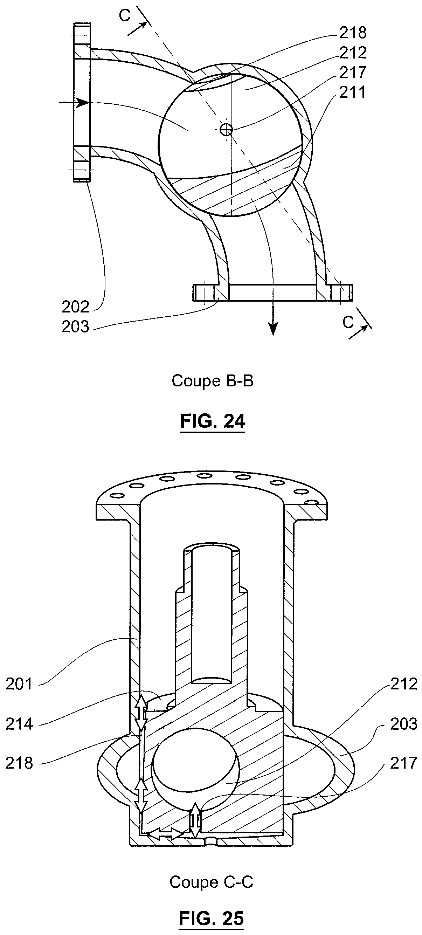

Lorsque la vanne 200 est fermée à droite, comme illustré en **figures 24 et 25****,** la circulation du liquide dans le circuit 1 est interrompue. En revanche, le passage interne 212 demeure en communication avec le tronçon de circuit connecté à la bride 202. Par l'intermédiaire du canal d'expansion 213, le réservoir d'expansion 100 demeure donc en communication avec le liquide présent dans le tronçon connecté sur cette bride 202 comme cela apparaît en figure 25.

Dans le cas où la vanne 200 est fermée et où l'évidement 218 n'est pas en communication directe avec l'entrée ou la sortie de la vanne 200 mais coopère avec la paroi interne 207 du corps 201 de vanne pour former un canal fermé, le liquide atteint le réservoir d'expansion 100 en passant par le passage interne 212, le canal inférieur 217, l'espace 221 puis l'évidement 218, comme cela est le cas lorsque la vanne est ouverte (et comme illustré en figure 23).

Dans cette position du boisseau, les risques d'apparition de jets de liquide dans le réservoir sont limités voire supprimés.

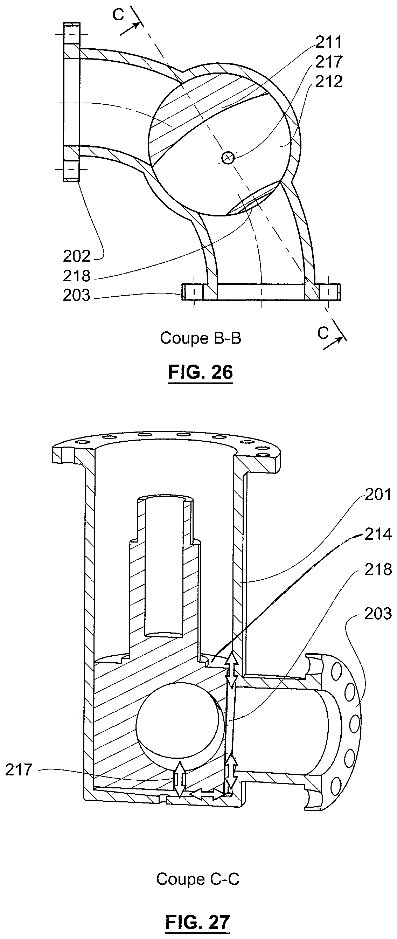

Lorsque la vanne 200 est fermée à gauche, comme illustré en **figures 26 et 27****,** la circulation du liquide dans le circuit 1 est interrompue. En revanche, le passage interne 212 demeure en communication avec le tronçon de circuit connecté à la bride 203. Par l'intermédiaire du canal d'expansion 213, le réservoir d'expansion 100 demeure donc en communication avec le liquide présent dans le tronçon connecté sur cette bride 203 comme cela apparaît en figure 27.

Dans le cas où la vanne 200 est fermée et où l'évidement 218 est en communication directe avec l'entrée ou la sortie de la vanne 200 (la sortie sur l'exemple des figures 26 et 27) le liquide atteint le réservoir d'expansion 100 en pénétrant depuis l'entrée/la sortie de la vanne directement dans l'évidement 218. Certes du liquide peut pénétrer dans le passage interne 212 par l'évidement 218, l'espace 221 et le canal inférieur 217, mais ce liquide demeure dans le passage interne 212 sans pouvoir traverser la vanne 200.

On privilégiera cette position de la vanne 200 lorsque la bride 203 est connectée à un tronçon formant l'entrée de la pompe 2 ou à proximité de l'entrée de la pompe 2. Dans ce tronçon, la vitesse du liquide est généralement faible et les risques de jets dans le réservoir d'expansion 100 sont limités.
- Dans chacun des modes de réalisation envisagés dans la description ci-dessus, l'obturateur est mobile à l'intérieur du corps 201 de vanne 200 qui lui est fixe par rapport au conduits connectés à l'entrée et à la sortie de la vanne 200. Le réservoir d'expansion 100 est quant à lui fixe par rapport au corps 201 de vanne 200. L'obturateur mobile est quant à lui mobile par rapport au réservoir d'expansion 100.

Avantageusement, l'obturateur mobile est distant d'une partie au moins du réservoir d'expansion 100. Ainsi, dans une partie au moins du réservoir d'expansion 100, l'obturateur mobile est absent.

Ainsi, le réservoir d'expansion 100 est distinct de l'obturateur mobile. Cela permet notamment de ne pas entraîner en déplacement, typiquement en rotation, le réservoir d'expansion 100 lors du déplacement de l'obturateur mobile, le réservoir d'expansion 100 comprenant possiblement un volume significatif de liquide et de gaz. Le système est ainsi rendu plus robuste, plus fiable et moins complexe.

Par ailleurs, l'indépendance entre le réservoir d'expansion 100 et l'obturateur mobile permet de dimensionner indépendamment ces deux éléments. En particulier, le réservoir d'expansion 100 peut être adapté, notamment en termes de volume, aux caractéristiques du circuit (débit, pression), tout en conservant un obturateur mobile de faible dimension. Un obturateur mobile de faible dimension permet notamment de réduire l'encombrement du système et de faciliter la réalisation d'un obturateur mobile aux dimensions et états de surface parfaitement maîtrisés de manière à garantir une bonne étanchéité de la vanne en position fermée.

Au vu de la description qui précède, il ressort clairement que l'invention offre un système efficace pour améliorer la fiabilité et la simplicité des circuits réversibles, particulièrement ceux dans lesquels circule un liquide à haute température et/ou chimiquement réactif. L'invention offre ainsi une solution particulièrement avantageuse pour les circuits d'essais pour pompes électromagnétiques pour métaux liquides telles que celles utilisées dans les circuits sodium de certains réacteurs nucléaires. Par ailleurs, l'invention s'avère avantageuse, quel que soit le liquide, dans les circuits où il est nécessaire de procéder à une inversion du sens de circulation, par exemple pour nettoyer des filtres en ligne.

L'invention n'est pas limitée aux modes de réalisations précédemment décrits et s'étend à tous les modes de réalisation couverts par les revendications.

Notamment, l'invention couvre les systèmes dans lesquels le moteur est disposé hors de l'enceinte formée par le corps de vanne et par le chapeau. Dans ce cas, un dispositif d'accouplement traverse l'enceinte.

**REFERENCES**

| | | | |
|---|---|---|---|
| 1. | Circuit | 112. | Liquide |
| 2. | Pompe | 120. | Motoréducteur |
| 3. | Tronçon | 121. | Support de moteur |
| 4. | Tronçon | 122. | Lignes d'alimentation/contrôle |
| 5. | Tronçon | 123. | Circuit de refroidissement |
| 6. | Echangeur | 124. | Dispositif de protection thermique |
| 7. | Réservoir d'expansion | 125. | Dispositif d'accouplement |
| 71. | Liquide | | |
| 72. | Gaz de pressurisation | | |
| 73. | Niveau libre | 200. | Vanne |
| 74. | Vanne d'isolement | 201. | Corps de vanne |
| 7'. | Réservoir d'expansion | 202. | Bride d'entrée |
| 74'. | Vanne d'isolement | 203. | Bride de sortie |
| 8. | Dispositif de protection | 204. | Bride de chapeau |
| 81. | Exutoire | 205. | Rebord |
| 9. | Vanne de laminage | 206. | Trou de vidange |
| 91. | Deuxième vanne de laminage | 207. | Paroi interne |
| | | 208. | Fond du corps de vanne |
| 10. | Système | 209. | Siège |
| | | | |
| 100. | Réservoir d'expansion | 210. | Boisseau |
| 101. | Chapeau de vanne | 211. | Corps de boisseau |
| 102. | Enceinte étanche | 212. | Passage interne |
| 103. | Gaz de pressurisation | 213. | Canal d'expansion |
| 104. | Orifice pour gaz de pressurisation | 214. | Face supérieure |
| 105. | Surface libre du liquide | 215. | Trou supérieur |
| 106. | Sonde de niveau | 216. | Axe |
| 107. | Surverse | 217. | Orifice inférieur |
| 108. | Palier | 218. | Evidement |
| 109. | Roulement | 219. | Face latérale |
| 110. | Passage de palier | 220. | Face inférieure |
| 111. | Brise-jet | 221. | Espace |

## Revendications

1. Système de régulation d'un liquide circulant dans un circuit (10), le système comprenant :
- une vanne (200) à boisseau comprenant au moins une entrée et une sortie, le boisseau (210) comprenant un passage interne (212) à travers lequel est destiné à passer le liquide s'écoulant depuis l'entrée vers la sortie de la vanne (200) lorsque la vanne est ouverte au moins partiellement,
- un réservoir d'expansion (100) en communication avec le liquide s'écoulant dans le circuit (1) et destiné à contenir du liquide et un gaz de compensation,
**caractérisé en ce que** le boisseau (210) comprend au moins en partie un canal d'expansion (213, 217, 218, 221) qui présente au moins une ouverture latérale située sur une face latérale (219) du boisseau (210) et qui est conformé pour assurer en fonctionnement une communication entre ladite ouverture latérale et le réservoir d'expansion (100), la vanne (200) étant conformée de manière à ce que :
- au moins lorsque la vanne (200) est fermée : l'ouverture latérale est en communication directe avec le liquide provenant de l'entrée ou de la sortie de la vanne (200) ;
- lorsque la vanne (200) est ouverte au moins partiellement, l'ouverture latérale coopère avec une paroi interne (207) solidaire d'un corps (201) de la vanne (200) de manière à former un conduit en communication d'une part avec le réservoir d'expansion (100) et d'autre part avec le passage interne (212).

2. Système (10) selon la revendication précédente, dans lequel le conduit débouche d'une part dans le réservoir d'expansion (100) et débouche d'autre part dans un espace (221) formé par une face inférieure (220) du boisseau (210) et un fond (208) du corps (201) de la vanne (200), cet espace (221) étant en communication avec le passage interne (212) par un canal (217) pratiqué dans le boisseau (210).

3. Système (10) selon l'une quelconque des revendications précédentes, dans lequel l'ouverture latérale est un évidement (218), la coopération de l'évidement (218) et de la paroi interne (207) formant le conduit lorsque la vanne (200) est ouverte au moins partiellement.

4. Système (10) selon l'une quelconque des revendications précédentes, dans lequel le boisseau (210) est un boisseau sphérique ou un boisseau cylindrique.

5. Système (10) selon l'une quelconque des revendications 1 à 3, dans lequel le boisseau (210) est un boisseau cylindrique, le système étant conformé de manière à ce que lorsque la vanne (200) est ouverte, le réservoir d'expansion (100) communique avec le liquide traversant la vanne (200) uniquement par l'intermédiaire de l'évidement (218), dudit espace (221) et du canal inférieur (217).

6. Système (10) selon l'une quelconque des revendications précédentes, dans lequel la vanne (200) est une vanne droite ou est une vanne coudée, l'entrée et la sortie de la vanne (200) formant un angle inférieur à 130°.

7. Système (10) selon l'une quelconque des revendications précédentes, dans lequel la vanne (200) comprend un corps (201) et un chapeau (101) formant une enceinte (102) et dans lequel le réservoir d'expansion (100) est logé dans l'enceinte.

8. Système (10) selon l'une quelconque des revendications précédentes, configuré de manière à orienter le sens de fermeture du boisseau (210) en fonction du sens de circulation du liquide dans le circuit (1).

9. Système (10) selon l'une quelconque des revendications précédentes, dans lequel le boisseau (210) est actionné par un dispositif de commande comprenant un motoréducteur (120) logé à l'intérieur du réservoir d'expansion (100).

10. Système (10) selon l'une quelconque des revendications précédentes, comprenant un palier de guidage en rotation du boisseau (210) et dans lequel le palier est logé à l'intérieur du réservoir d'expansion (100).

11. Système (10) selon l'une quelconque des revendications précédentes, dans lequel la vanne (200) est une vanne de laminage.

12. Système (10) selon l'une quelconque des revendications précédentes, dans lequel l'obturateur mobile est mobile par rapport au réservoir d'expansion (100).

13. Système (10) selon l'une quelconque des revendications précédentes, dans lequel le réservoir d'expansion (100) surmonte l'obturateur mobile.

14. Système (10) selon l'une quelconque des revendications précédentes, dans lequel le réservoir d'expansion (100) est fixe par rapport au corps (201) de vanne (200) lors du déplacement de l'obturateur mobile.

15. Système (10) selon l'une quelconque des revendications précédentes, dans lequel le réservoir d'expansion (100) est connecté sur la vanne (200) en étant disposé à distance de cette dernière.

16. Circuit (1) comprenant un système selon l'une quelconque des revendications précédentes et une pompe (2) apte à débiter dans deux sens opposés et dans lequel la vanne (200) est une vanne à boisseau, dans lequel le boisseau (210) comprend au moins un canal d'expansion (213) pour le passage du liquide débouchant dans un passage interne (212) (212) du boisseau (210) pour mettre en communication le réservoir d'expansion (100) et le circuit (1), le circuit (1) étant configuré de manière orienter le sens de fermeture du boisseau (210) en fonction du sens de circulation du liquide dans le circuit (1).

17. Utilisation du système (10) selon l'une quelconque des revendications 1 à 15 pour réguler la circulation d'un liquide présentant une température supérieure ou égale à 350°C et de préférence supérieure ou égale à 400°C et de préférence pour réguler la circulation de sodium liquide destiné à assurer le transfert de chaleur dans un circuit de réacteur nucléaire à caloporteur sodium.

## Patentansprüche

1. System zur Steuerung einer Flüssigkeit, die in einem Kreislauf (10) zirkuliert, wobei das System Folgendes umfasst:
- ein Kugelventil (200), das mindestens einen Eingang und einen Ausgang umfasst, wobei der Kegel (210) einen inneren Durchgang (212) umfasst, durch den die Flüssigkeit durchgehen soll, die von dem Eingang zu dem Ausgang des Ventils (200) fließt, wenn das Ventil wenigstens teilweise offen ist,
- ein Expansionsgefäß (100) in Kommunikation mit der Flüssigkeit, die in dem Kreislauf (1) fließt und das dazu bestimmt ist, Flüssigkeit und ein Kompensationsgas zu enthalten,
**dadurch gekennzeichnet, dass** der Kegel (210) mindestens zum Teil einen Expansionskanal (213, 217, 218, 221) umfasst, der mindestens eine seitliche Öffnung aufweist, die auf einer seitlichen Fläche (219) des Kegels (210) liegt und ausgestaltet ist, um beim Betrieb eine Kommunikation zwischen der seitlichen Öffnung und dem Expansionsgefäß (100) sicherzustellen, wobei das Ventil (200) derart ausgestaltet ist, dass:
- mindestens wenn das Ventil (200) geschlossen ist:
die seitliche Öffnung in direkter Kommunikation mit der Flüssigkeit steht, die von dem Eingang oder dem Ausgang des Ventils (200) kommt,
- wenn das Ventil (200) wenigstens teilweise offen ist, die seitliche Öffnung mit einer inneren Wand (207) zusammenwirkt, die fest mit einem Körper (201) des Ventils (200) verbunden ist, so dass eine Leitung gebildet wird, die einerseits mit dem Expansionsgefäß (100) und andererseits mit dem internen Durchgang (212) in Kommunikation steht.

2. System (10) nach dem vorhergehenden Anspruch, wobei die Leitung einerseits in das Expansionsgefäß (100) mündet und andererseits in einen Raum (221) mündet, der durch eine untere Fläche (220) des Kegels (210) und einen Boden (208) des Körpers (201) des Ventils (200) gebildet ist, wobei dieser Raum (221) mit dem inneren Durchgang (212) durch einen Kanal (217), der in dem Kegel (210) angelegt ist, in Kommunikation steht.

3. System (10) nach einem der vorhergehenden Ansprüche, wobei die seitliche Öffnung eine Aussparung (218) ist, wobei das Zusammenwirken der Aussparung (218) und der inneren Wand (207) die Leitung bildet, wenn das Ventil (200) offen oder wenigstens teilweise offen ist.

4. System (10) nach einem der vorhergehenden Ansprüche, wobei der Kegel (210) ein kugelförmiger Kegel oder ein zylindrischer Kegel ist.

5. System (10) nach einem der Ansprüche 1 bis 3, wobei der Kegel (210) ein zylindrischer Kegel ist, wobei das System derart ausgestaltet ist, dass, wenn das Ventil (200) offen ist, das Expansionsgefäß (100) mit der Flüssigkeit, die das Ventil (200) durchquert, nur über die Aussparung (218) des Raums (221) des unteren Kanals (217) in Kommunikation steht.

6. System (10) nach einem der vorhergehenden Ansprüche, wobei das Ventil (200) ein gerades Ventil ist oder ein abgewinkeltes Ventil ist, wobei der Eingang und der Ausgang des Ventils (200) einen Winkel kleiner als 130° bilden.

7. System (10) nach einem der vorhergehenden Ansprüche, wobei das Ventil (200) einen Körper (201) und eine Kappe (101), die einen Einschluss (102) bildet und in der das Expansionsgefäß (100) in dem Einschluss aufgenommen ist, umfasst.

8. System (10) nach einem der vorhergehenden Ansprüche, das derart konfiguriert ist, dass die Schließrichtung des Kegels (210) in Abhängigkeit von der Zirkulationsrichtung der Flüssigkeit in dem Kreislauf (1) ausgerichtet ist.

9. System (10) nach einem der vorhergehenden Ansprüche, wobei der Kegel (210) von einer Steuervorrichtung betätigt wird, die einen Getriebemotor (120) umfasst, der in dem Inneren des Expansionsgefäßes (100) aufgenommen ist.

10. System (10) nach einem der vorhergehenden Ansprüche, das ein Lager zur Führung in Drehung des Kegels (210) umfasst, und wobei das Lager in dem Inneren des Expansionsgefäßes (100) aufgenommen ist.

11. System (10) nach einem der vorhergehenden Ansprüche, wobei das Ventil (200) ein Regulierventil ist.

12. System (10) nach einem der vorhergehenden Ansprüche, wobei der bewegliche Verschluss in Bezug zu dem Expansionsgefäß (100) beweglich ist.

13. System (10) nach einem der vorhergehenden Ansprüche, wobei das Expansionsgefäß (100) über dem beweglichen Verschluss liegt.

14. System (10) nach einem der vorhergehenden Ansprüche, wobei das Expansionsgefäß (100) in Bezug zu dem Körper (201) des Ventils (200) bei der Bewegung des beweglichen Verschlusses stationär ist.

15. System (10) nach einem der vorhergehenden Ansprüche, wobei das Expansionsgefäß (100) auf dem Ventil (200) angeschlossen ist, indem es von ihm beabstandet angeordnet ist.

16. Kreislauf (1), der ein System nach einem der vorhergehenden Ansprüche und eine Pumpe (2) umfasst, die geeignet ist, um in zwei entgegengesetzte Richtungen zu fördern, und wobei das Ventil (200) ein Kugelventil ist, wobei der Kegel (210) mindestens einen Expansionskanal (213) für das Durchgehen der Flüssigkeit umfasst, der in einen inneren Durchgang (212) (212) des Kegels (210) mündet, um das Expansionsgefäß (100) und den Kreislauf (1) in Kommunikation zu versetzen, wobei der Kreislauf (1) derart konfiguriert ist, dass er die Schließrichtung des Kegels (210) in Abhängigkeit von der Zirkulationsrichtung der Flüssigkeit in dem Kreislauf (1) ausrichtet .

17. Einsatz des Systems (10) nach einem der Ansprüche 1 bis 15 zum Regulieren der Zirkulation einer Flüssigkeit, die eine Temperatur über oder gleich 350 °C und bevorzugt größer oder gleich 400 °C aufweist, und bevorzugt zum Regulieren der Zirkulation von flüssigem Natrium, das dazu bestimmt ist, die Wärmeübertragung in einem Kernreaktor mit Natriumwärmeträger sicherzustellen.

## Claims

1. System for regulating a liquid in a circuit (10), with the system comprising:
- a plug valve (200) comprising at least one inlet and one outlet, the plug (210) comprising an internal passage (212) through which is intended to pass the liquid flowing from the inlet to the outlet of the valve (200) when the valve is open at least partially,
- an expansion reservoir (100) in communication with the liquid flowing in the circuit (1) and intended to contain liquid and a compensating gas,
wherein the plug (210) comprises at least partially an expansion channel (213, 217, 218, 221) which has at least one lateral opening located on a lateral face (219) of the plug (210) and which is conformed to provide in operation a communication between said lateral opening and the expansion reservoir (100), the valve (200) being conformed in such a way that:
- at least when the valve (200) is closed: the lateral opening is in direct communication with the liquid coming from the inlet or from the outlet of the valve (200);
- when the valve (200) is open at least partially, the lateral opening cooperates with an inner wall (207) integral with a body (201) of the valve (200) in such a way as to form a conduit in communication on the one hand with the expansion reservoir (100) and on the other hand with the internal passage (212).

2. System (10) according to the preceding claim, wherein the conduit opens on the one hand into the expansion reservoir (100) an opens on the other hand into a space (221) formed by a lower face (220) of the plug (210) and a bottom (208) of the body (201) of the valve (200), with this space (221) being in communication with the internal passage (212) by a channel (217) made in the plug (210).

3. System (10) according to any of the preceding claims, wherein the lateral opening is a recess (218), with the cooperation of the recess (218) and the inner wall (207) forming the conduit when the valve (200) is open at least partially.

4. System (10) according to any of the preceding claims, wherein the plug (210) is a spherical plug or a cylindrical plug.

5. System (10) according to any of claims 1 to 3, wherein the plug (210) is a cylindrical plug, the system being conformed in such a way that when the valve (200) is open, the expansion reservoir (100) communicates with the liquid passing through the valve (200) solely through the recess (218), of said space (221) and of the lower channel (217).

6. System (10) according to any of the preceding claims, wherein the valve (200) is a straight valve or is an elbow valve, with the inlet and the outlet of the valve (200) forming an angle less than 130°.

7. System (10) according to any of the preceding claims, wherein the valve (200) comprises a body (201) and a cover (101) forming an enclosure (102) and wherein the expansion reservoir (100) is housed in the enclosure.

8. System (10) according to any of the preceding claims, configured in such a way as to orient the direction of closing of the plug (210) according to the direction of the circulation of the liquid in the circuit (1).

9. System (10) according to any of the preceding claims, wherein the plug (210) is actuated by a control device comprising a reduction gear (120) housed inside the expansion reservoir (100).

10. System (10) according to any of the preceding claims, comprising a rotational guiding bearing of the plug (210) and wherein the bearing is housed inside the expansion reservoir (100).

11. System (10) according to any of the preceding claims, wherein the valve (200) is a throttle valve.

12. System (10) according to any of the preceding claims, wherein the movable obturator is movable with respect to the expansion reservoir (100).

13. System (10) according to any of the preceding claims, wherein the expansion reservoir (100) surmounts the movable obturator.

14. System (10) according to any of the preceding claims, wherein the expansion reservoir (100) is fixed with respect to the body (201) of the valve (200) during the displacement of the movable obturator.

15. System (10) according to any of the preceding claims, wherein the expansion reservoir (100) is connected to the valve (200) by being arranged at a distance from the latter.

16. Circuit (1) comprising a system according to any of the preceding claims and a pump (2) able to deliver in two opposite directions, and wherein the valve (200) is a plug valve, wherein the plug (210) comprises at least one expansion channel (213) for the passing of the liquid opening into an inner passage (212) (212) of the plug (210) in order to place in communication the expansion reservoir (100) and the circuit (1), the circuit (1) being configured in such a way as to orient the direction of closing of the plug (210) according to the direction of the circulation of the liquid in the circuit (1).

17. Usage of a system (10) according to any of claims 1 to 15 to adjust the circulation of a liquid having a temperature greater than or equal to 350°C and preferably greater than or equal to 400°C and preferably to adjust the circulation of liquid sodium intended to provide for the heat transfer in a circuit of a sodium cooled nuclear reactor.
